# EUROPEAN PATENT APPLICATION

(11) **EP 2 180 709 A2**
(43) Date of publication of application: **28.04.2010**
(21) Application number: 09156066.4
(22) Date of filing: 24.03.2009
(51) Int. Cl.: H04N 7/24

(54) **Broadcast processing apparatus and control method thereof**

(30) Priority: 22.10.2008 KR 20080103627
(71) Applicant: Samsung Electronics Co., Ltd., Suwon-si, Gyeonggi-do 442-742 (KR)
(72) Inventor: Jin, Kyoung-shin, Yongin-si, Gyeonggi-do (KR)
(74) Representative: Brandon, Paul Laurence

(57) **Abstract**

There are provided a broadcast processing apparatus (100) and a control method thereof. The apparatus (100) includes a signal receiving unit (10) which receives a broadcast signal modulated in different priorities according to picture quality; a demapping unit (20) which demaps the broadcast signal; an error detection unit (40) which detects an error rate of the demapped broadcast signal; and a controller (50) which controls the demapping unit (20) so that a demapping format of the broadcast signal can be changed based on the detected error rate.

## Description

### BACKGROUND OF INVENTION

### Field of Invention

Apparatuses and methods consistent with the present invention relate to a broadcast processing apparatus which can receive a broadcast signal hierarchically modulated and to control methods thereof.

### Description of Related Art

Recently, broadcast services for digital broadcasting employing multi carriers have been developed. According to the multi-carrier method, hierarchical modulation is applied to digital broadcasting to provide different broadcast services through a single channel. In the case of satellite broadcasting, an ultrahigh frequency band is employed for a satellite radio, and thus, a video signal may be temporarily suspended and an audio signal may be also deteriorated due to characteristics of a radio signal, in the case of heavy rain or interference by multi-paths. In this case, if a broadcast signal is modulated in different hierarchies for transmission, the amount of data to be transmitted decreases but a wide service range of broadcast signal may be provided.

Further, this hierarchical modulation is employed for portable or mobile receiving service communication.

A broadcast signal may be modulated in a variety of hierarchical modulation methods in consideration of a service range, a data transmission rate, etc.

### SUMMARY OF INVENTION

Preferred embodiments of the present invention aim to provide a broadcast processing apparatus having an improved reception and a control method thereof.

Preferred embodiments of the present also aims to provide a broadcast processing apparatus capable of efficiently receiving a broadcast signal according to reception.

The present invention provides a broadcast processing apparatus comprising: a signal receiving unit which receives a broadcast signal modulated in different priorities according to picture quality; a demapping unit which demaps the broadcast signal; an error detection unit which detects an error rate of the demapped broadcast signal; and a controller which controls the demapping unit so that a demapping format of the broadcast signal can be changed based on the detected error rate.

The broadcast signal may include a high definition broadcast signal and a standard definition broadcast signal, wherein the high definition broadcast signal is modulated in a low priority, and the standard definition broadcast signal is modulated in a high priority, and wherein the controller controls the demapping unit so that the broadcast signal modulated in the high priority can be demapped if the error rate is beyond a predetermined allowable range.

The error detection unit may detect at least one of a block error rate, a bit error rate, a signal to noise ratio error rate and a carrier to noise ratio.

The controller may control the demapping unit so that the demapping format can be automatically changed according to the error rate.

The apparatus may further include a user selection unit for selection of the demapping format of the broadcast signal, wherein the controller controls the demapping unit so that the demapping format can be changed if a signal for selection of the demapping format is received through the user selection unit.

The controller may inform a user of change in the demapping format or change in the picture quality of the broadcast signal.

The present invention also provides a control method of a broadcast processing apparatus which receives a broadcast signal modulated in different priorities according to picture quality, comprising: demapping the broadcast signal; detecting an error rate of the demapped broadcast signal; and changing a demapping format of the broadcast signal based on the demapped error rate.

The broadcast signal may include a high definition broadcast signal and a standard definition broadcast signal, wherein the high definition broadcast signal is modulated in a low priority, and the standard definition broadcast signal is modulated in a high priority, and wherein the changing the demapping format includes demapping the broadcast signal modulated in the high priority if the error rate is beyond a predetermined allowable range.

The detecting the error rate may include detecting at least one of a block error rate, a bit error rate, a signal to noise ratio error rate and a carrier to noise ratio.

The changing the demapping format may be automatically performed according to the error rate.

The broadcast processing apparatus may include a user selection unit for selection of the demapping format of the broadcast signal, and wherein the changing the demapping format is performed when a signal for selection of the demapping format is received through the user selection unit.

The method may further include informing a user of change in the demapping format or change in the picture quality of the broadcast signal.

As described above, according to preferred embodiments of the present invention, there is provided a broadcast processing apparatus having an improved reception and a control method thereof.

Further, there is provided a broadcast processing apparatus capable of efficiently receiving a broadcast signal according to reception.

Furthermore, there is provided a broadcast processing apparatus in which a user can select a modulation format of a broadcast signal and confirm change of the modulation format, and a control method thereof.

### BRIEF DESCRIPTION OF DRAWINGS

The present invention will become apparent and more readily appreciated from the following description of the exemplary embodiments, taken in conjunction with the accompanying drawings, in which:
FIG. 1 is a block diagram illustrating a broadcast processing apparatus according to an exemplary embodiment of the present invention;
FIG. 2 is a diagram for illustrating hierarchical modulation of a broadcast signal received to the broadcast processing apparatus in FIG. 1;
FIG. 3 is a flowchart illustrating a control method of a broadcast processing apparatus according to an exemplary embodiment of the present invention; and
FIG. 4 is a block diagram illustrating a broadcast processing apparatus according to another exemplary embodiment of the present invention.

### DETAILED DESCRIPTION OF EXEMPLARY EMBODIMENTS

Reference will now be made in detail to the embodiments of the present invention, examples of which are illustrated in the accompanying drawings, wherein like reference numerals refer to like elements throughout. The exemplary embodiments are described below so as to explain the present invention by referring to the figures. Redundant description to different embodiments may be omitted for simplicity of description.

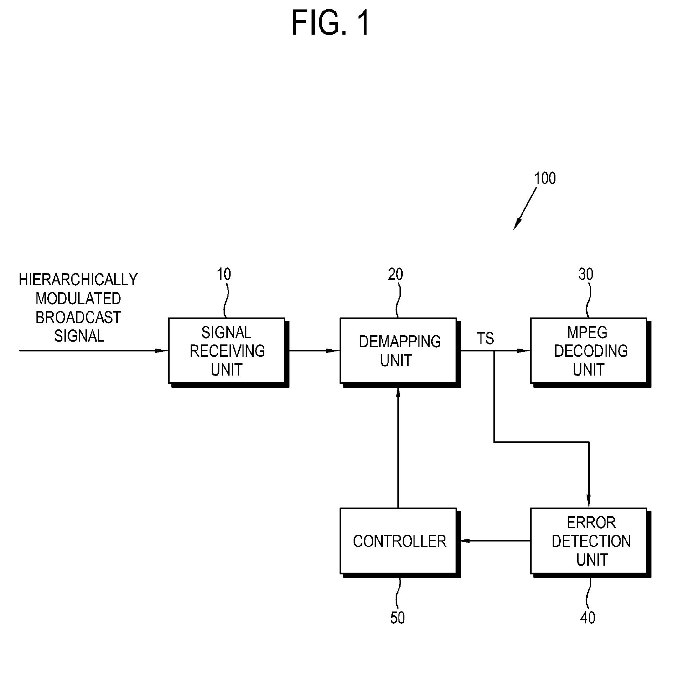

FIG. 1 illustrates a broadcast processing apparatus 100 according to an exemplary embodiment of the present invention. The broadcast processing apparatus 100 includes a signal receiving unit 10, a demapping unit 20, an MPEG decoding unit 30, an error detection unit 40 and a controller 50 which controls the above components. The broadcast processing apparatus 100 may be embodied as a television or a set top box.

The signal receiving unit 10 receives a broadcast signal transmitted from a broadcasting station, and includes an antenna, a cable and a tuner. The broadcast signal received through the signal receiving unit 10 is modulated in different hierarchies according to the quality of pictures.

As described above, the hierarchical modulation employing the multi carriers to modulate a digital broadcast can provide two different broadcast services through a signal channel, which cannot be provided by a conventional analog broadcasting method. For example, European DVB-T (Digital Video Broadcasting-Terrestrial) modulates a broadcast signal with COFDM (Coded Orthogonal Frequency Division Multiplex). In this respect, the DVB-T applies the hierarchical modulation to the COFDM. The hierarchical modulation employing the COFDM realizes a high priority (HP) stream within a low priority (LP) stream and then modulates two divided data streams into a single transfer stream (TS). The high priority stream and the low priority stream may have the same contents, or may have different contents. That is, a broadcast station may provide a user with two different broadcast signals through a single channel.

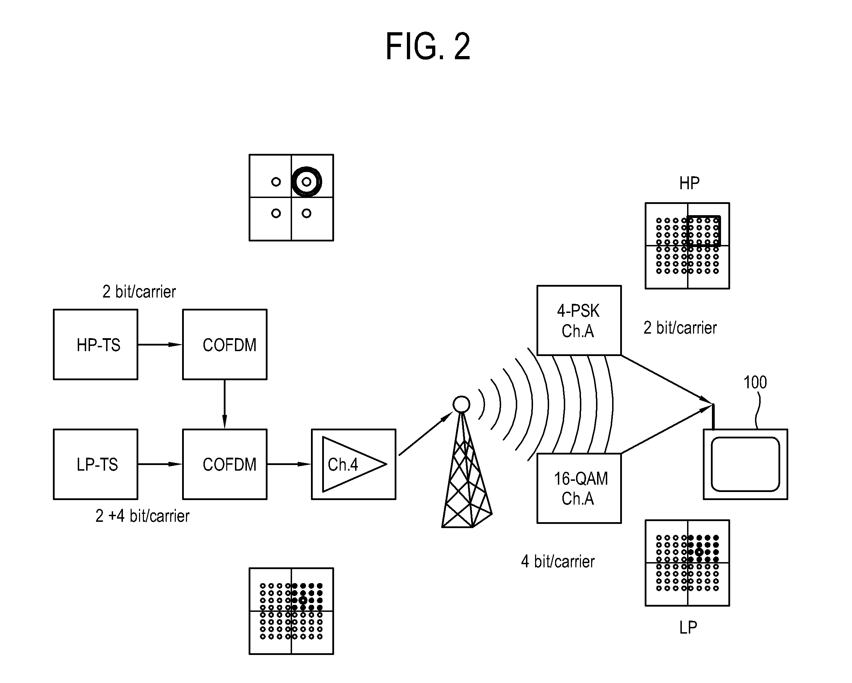

FIG. 2 is a diagram for illustrating the hierarchical modulation of a broadcast signal received to the broadcast processing apparatus 100 in FIG. 1. Two broadcast signals, that is, a high priority stream (HP-TS) and a low priority stream (LP-TS) are represented as constellation points having sizes and phases on a complex number plane. The high priority stream is modulated using a carrier of 2 bits in a 4-PSK (QPSK: Quadrature Phase-Shift Keying) method; and the low priority stream is modulated using a carrier of 4 bits in four respective quadrants in a 16QAM (16 Quadrature Amplitude Modulation) method. As 64-QAM is divided into 4-PSK and 16QAM, a 64-QAM modulated transfer stream transmitted to the broadcast processing apparatus 100 is considered to include a broadcast signal which is COFDM-modulated into a 4-PSK transfer stream of 2 bits and a broadcast signal which is COFDM-modulated into a 16QAM transfer stream of 4 bits. That is, a broadcasting station modulates a broadcast signal into 64-QAM to form MPEG transfer streams of 4-PSK and 16QAM, and divides a signal channel into two virtual channels to transmit the transfer streams. The broadcast processing apparatus 100 may receive the high priority stream and the low priority stream through a single channel (ch. 4), and a user may view different broadcast signals through the single channel.

The hierarchical modulation is remarkably susceptible to noises, which affects the range of broadcast services. The high priority stream has a low data rate but a large service range; whereas the low priority stream has a high data rate but a narrow service range. Thus, a high definition (HP) broadcast signal is modulated in the low priority; and a standard definition (SD) broadcast signal is modulated in the high priority.

Turning to FIG. 1, the demapping unit 20 demaps a broadcast signal according to the way in which the broadcast signal is modulated in a broadcasting station. The broadcast signal includes a variety of transmission parameter signaling for hierarchical modulation, such as a code rate (which is the ratio of effective data to the whole data rate), modulation format (for example, carrier modulation), guard interval, carrier number, frame structure, constellation ratio (α) (which informs whether the hierarchical modulation has occurred), etc. The demapping unit 20 may check the modulation format of a broadcast signal received using the constellation ratio (α), and demaps the broadcast signal under the control of the controller 50. In this respect, the term 'demapping' refers to demodulation of a broadcast signal modulated using a carrier.

The MPEG decoding unit 30 decodes a transfer stream signal outputted from the demapping unit 20 and processes a broadcast signal to be displayed through a display unit (not shown).

The error detection unit 40 detects an error rate of a broadcast signal from the transfer stream signal outputted from the demapping unit 20 to the MPEG decoding unit 30. The term "error rate' refers to the extent of an error contained in a received broadcast signal. The less the error rate becomes, the better receive sensitivity becomes and the more definite a broadcasting screen becomes. The error rate is affected by an environment around an antenna, change in an electric field, multi-path for transmission of a broadcast signal, etc. If the error rate increases, the broadcast signal may not be received according to a receiving environment. The error detection unit 40 detects at least one of a block error rate (BER), a bit error rate, a signal to noise ratio error rate, and a carrier to noise ratio. The BER, bit error rate, signal to noise ratio error rate and carrier to noise ratio may be detected through voltage or power of the transfer stream signal.

The controller 50 controls the demapping unit 20 to change a demapping format of a broadcast signal based on the error rate detected by the error detection unit 40. To the contrary, in a conventional broadcast processing apparatus, a broadcast signal is demapped in a demapping format preset as a default even though a broadcast signal hierarchically modulated is received. Thus, a user cannot help viewing a broadcast signal having remarkably low reception even in the case that the error rate increases according to a receiving environment or a receiving path of the broadcast signal. The controller 50 according to the present embodiment changes the demapping format of the broadcast signal based on the error rate of the broadcast signal to maintain reception of the broadcast signal at a predetermined level. That is, if the error rate is beyond a predetermined allowable range, the controller 50 controls the demapping unit 20 so that a broadcast signal modulated in the high priority can be demapped. An SD broadcast signal has relatively low resolution compared with an HD broadcast signal, but may be provided in a relatively large service range through the high priority modulation. The controller 50 may automatically demap a high priority transfer stream having a large service range when the state of a broadcast signal becomes inferior while demapping a low priority modulated HD broadcast signal. The error detection unit 40 continuously detects the error rate of a transfer stream signal, while the controller 50 controls the demapping unit 20 so that a low priority transfer stream can be again demapped if the error rate falls within the allowable range.

Although not shown, the broadcast processing apparatus 100 further includes processing blocks for broadcast signal processing such as an A/D converter, a guard interval removal unit and a transformer which performs FFT (Fast Fourier Transform).

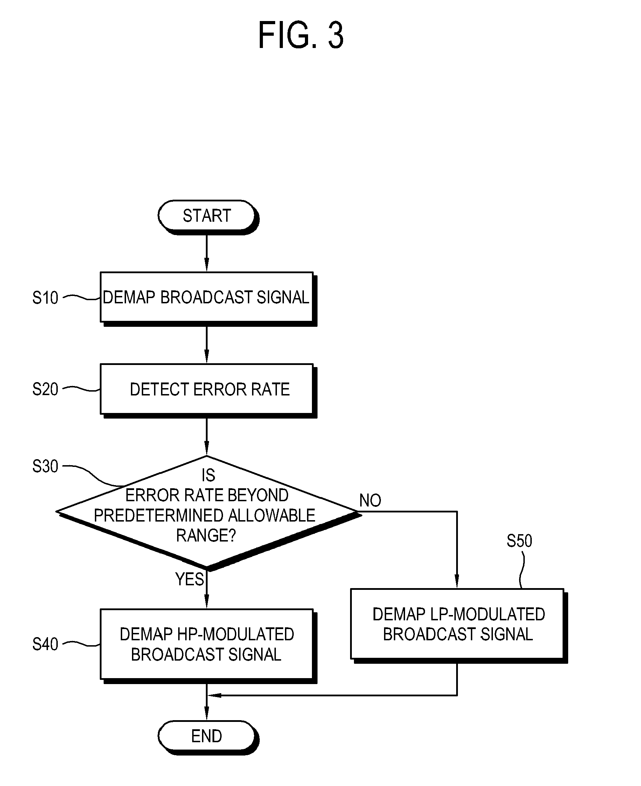

Hereinafter, a control method according to an exemplary embodiment of the present invention will be described with reference to FIG. 3 which is a flowchart illustrating the control method according to the present embodiment.

Firstly, the broadcast processing apparatus 100 demaps a broadcast signal received through the signal receiving unit 10 (S10).

The demapped transfer stream signal is outputted to the MPEG decoding unit 30 and simultaneously is provided to the error detection unit 40; and the error detection unit 40 detects the error rate of the transfer stream signal (S20).

The controller 50 determines whether the error rate is beyond a predetermined allowable range (S30). The allowable range refers to a critical range in which it can be determined that a broadcast signal cannot be normally displayed when a low priority transfer stream, that is, an HD broadcast signal is demapped. The allowable range may be set to have different values according to the parameters for detection of the error rate, for example, BER, bit error rate, signal to noise ratio error rate or carrier to noise ratio.

If it is determined that the error rate is beyond the allowable range, the controller 50 changes the demapping format to demap a high priority modulated transfer stream, that is, an SD broadcast signal (S40); and if it is determined that the error rate is within the allowable range, the controller 50 demaps a low priority modulated broadcast signal (S50).

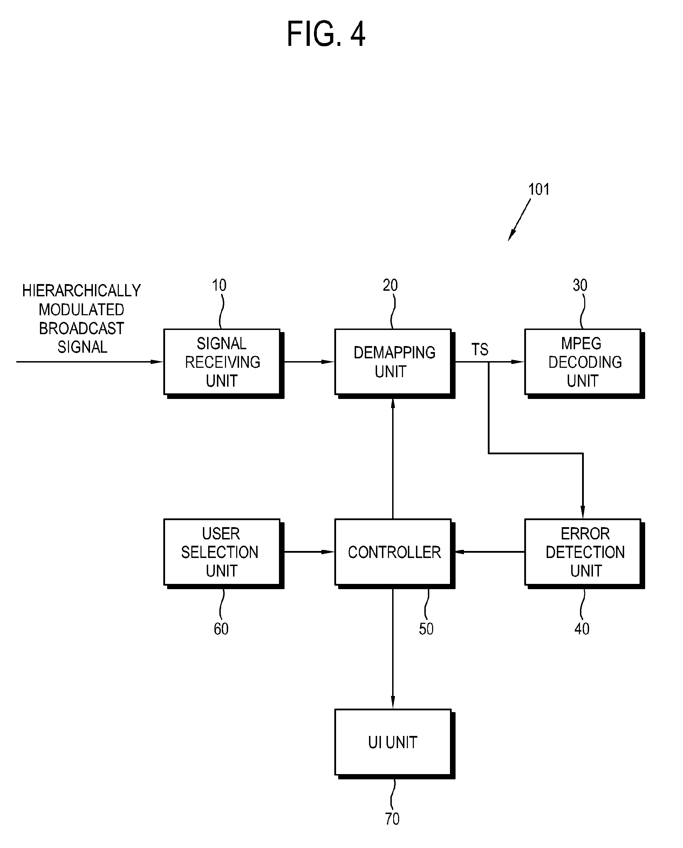

FIG. 4 is a block diagram illustrating a broadcast processing apparatus 101 according to another exemplary embodiment of the present invention.

As shown in FIG. 4, the broadcast processing apparatus 101 further includes a user selection unit 60 and a user interface (UI) unit 70, in addition to the components of the broadcast processing apparatus 100 in FIG. 1.

The user selection unit 60 is a user interface for selection of a demapping format of a broadcast signal, and generates a signal for selection of the demapping format through user's manipulation. The user selection unit 60 may be embodied as a short button provided on an outside frame of the broadcast processing apparatus 101, or may be embodied as a typical input device such as a remote controller, a mouse and a touchpad. Further, a user may output a selection signal for displaying through the display unit (not shown) UI information for confirming or changing a demapping format of a broadcast signal being currently received.

If it is determined that the error rate of the broadcast signal detected by the error detection unit 40 is beyond an allowable range, the controller 50 informs a user of the determination result so that the user can change the demapping format, and changes the demapping format depending on the user's selection.

The UI unit 70 generates UI information for informing the user of the change in the demapping format or change in picture quality of the broadcast signal under the control of the controller 50. The UI unit 70 may be embodied as an OSD generating unit for displaying the UI information on the display unit, or may be embodied as a light emitting diode in which a light emitting format is changed according to the demapping format. The user may confirm mapping information of a broadcast signal through the UI unit 70 and the user selection unit 60, and may select a broadcast signal having a user desired picture quality.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast processing apparatus (100) comprising:
a signal receiving unit (10) which receives a broadcast signal modulated in different priorities according to picture quality;
a demapping unit (20) which demaps the broadcast signal;
an error detection unit (40) which detects an error rate of the demapped broadcast signal; and
a controller (50) which controls the demapping unit (20) so that a demapping format of the broadcast signal can be changed based on the detected error rate.

2. The apparatus (100) according to claim 1, wherein the broadcast signal comprises a high definition broadcast signal and a standard definition broadcast signal,
wherein the high definition broadcast signal is modulated in a low priority, and the standard definition broadcast signal is modulated in a high priority, and
wherein the controller (50) controls the demapping unit (20) so that the broadcast signal modulated in the high priority can be demapped if the error rate is beyond a predetermined allowable range.

3. The apparatus (100) according to claim 2, wherein the error detection unit (40) detects at least one of a block error rate, a bit error rate, a signal to noise ratio error rate and a carrier to noise ratio.

4. The apparatus (100) according to claim 1, wherein the controller (50) controls the demapping unit (20) so that the demapping format can be automatically changed according to the error rate.

5. The apparatus (100) according to any preceeding claim, further comprising a user selection unit (60) for selection of the demapping format of the broadcast signal,
wherein the controller (50) controls the demapping unit (20) so that the demapping format can be changed if a signal for selection of the demapping format is received through the user selection unit (60).

6. The apparatus (100) according to any preceeding claim,
wherein the controller (50) informs a user of change in the demapping format or change in the picture quality of the broadcast signal.

7. A control method of a broadcast processing apparatus (100) which receives a broadcast signal modulated in different priorities according to picture quality, comprising:
demapping the broadcast signal;
detecting an error rate of the demapped broadcast signal; and
changing a demapping format of the broadcast signal based on the demapped error rate.

8. The method according to claim 7, wherein the broadcast signal comprises a high definition broadcast signal and a standard definition broadcast signal,
wherein the high definition broadcast signal is modulated in a low priority, and the standard definition broadcast signal is modulated in a high priority, and
wherein the changing the demapping format comprises demapping the broadcast signal modulated in the high priority if the error rate is beyond a predetermined allowable range.

9. The method according to claim 8, wherein the detecting the error rate comprises detecting at least one of a block error rate, a bit error rate, a signal to noise ratio error rate and a carrier to noise ratio.

10. The method according to claim 8, wherein the changing the demapping format is automatically performed according to the error rate.

11. The method according to claim 8, wherein the broadcast processing apparatus (100) comprises a user selection unit (60) for selection of the demapping format of the broadcast signal, and
wherein the changing the demapping format is performed when a signal for selection of the demapping format is received through the user selection unit (60).

12. The method according to claim 8, further comprising informing a user of change in the demapping format or change in the picture quality of the broadcast signal.
